# EUROPÄISCHE PATENTSCHRIFT

(11) **EP 0 650 431 B1**
(45) Veröffentlichungstag und Bekanntmachung des Hinweises auf die Patenterteilung: **06.11.2002**
(21) Anmeldenummer: 94918777.7
(22) Anmeldetag: 16.05.1994
(51) Int. Cl.: B62J 6/12, H02K 7/10

(54) **NABENLICHTMASCHINE**
BICYCLE HUB DYNAMO
DYNAMO D'ECLAIRAGE POUR MOYEU DE ROUE

(30) Priorität: 17.05.1993 DE 9307438 U; 25.08.1993 DE 9312367 U
(43) Veröffentlichungstag der Anmeldung: 03.05.1995
(73) Patentinhaber: Wangermann, Ute Christina, 25524 Itzehoe (DE)
(72) Erfinder: Wangermann, Jochen R., 25545 Itzehoe (DE)
(74) Vertreter: Findeisen, Andreas
(86) Internationale Anmeldenummer: EP9401575
(87) Internationale Veröffentlichungsnummer: WO94026578

(56) Entgegenhaltungen:
- WO-A-93/04908
- DE-A- 3 322 038
- DE-U- 9 300 311

## Beschreibung

Die Erfindung betrifft eine Nabenlichtmaschine zur Montage in einer Nabe eines Laufrades eines Fahrrades, die zwei zum Befestigen von Speichen für die Felgenhalterung dienende Nabenflansche aufweist und drehbar auf einer Achse des Laufrades montiert ist, bei der mittels eines Getriebes ein Rotor/-Stator-Induktionssystem zur Stromerzeugung angetrieben und der erzeugte Strom über einen Stromabnahmekontakt abgeführt wird, wobei der Rotor ein Zahnritzel trägt, das mit dem Getriebe in Wirkverbindung steht, das durch Federdruck mittels einer Kupplung mit einer Kupplungsscheibe in Wirkverbindung bringbar ist, die synchron zum Nabenkörper rotiert, wobei die Kupplung mittels in axialer Richtung mittels einer Kurvenscheibe verschiebbaren Stiften betätigbar ist, und wobei das Getriebe im ausgeschalteten Zustand vollständig vom Nabenkörper getrennt ist und völlständig relativ zur Achse zur Ruhe kommt und die Ritzelscheibe der ersten Stirnradstufe des Getriebes lösbar oder fest mit der Achse verbunden ist, der das Getriebe umgebende Hohlzylinder mit Innenverzahnung alle Getriebestufen übergreift, und die auf die erste Getriebestufe folgenden Getriebestufen als Planetengetriebe ausgebildet sind.

Eine derartige Nabenlichtmaschine ist durch die DE-U-9300311 bekannt. Bei dieser Ausbildung rotiert der Magnetrotor um eine feste Spulenanordnung. Eine weitere Nabenlichtmaschine ist durch die DE 33 22 038 A1 bekannt, bei der ein am Magnetrotor ausgebildetes Ritzel durch den Druck einer Feder mit einem Stirnradgetriebe in Wirkverbindung gebracht werden kann. Dieses Getriebe ist jedoch nur einstufig ausgebildet, so daß bei dieser Nabenlichtmaschine der Rotor - trotz eines nicht geringem Nabendurchmessers - nur etwa das 4-fache der Laufraddrehzahl erreichen kann.

Die Aufgabe der Erfindung besteht darin, die Nabenlichtmaschine der eingangs genannten Art so zu verbessern, daß bei vereinfachter Bauweise ohne Vergrößerung der Baulänge mehr Raum für die Unterbringung des Rotor/StatorInduktionssystems erzielt wird, wobei durch das Getriebe zuverlässig eine langsame Drehzahl in eine schnelle Drehzahl übersetzt werden kann und eine mechanische Beschädigung des Getriebes durch einen Überlastungsschutz verhindert werden soll.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Ziel der Erfindung ist es, für die Stromerzeugung ein Rotor/Stator-Induktionssystem zu verwenden, wie es von konventionellen Fahrrad-Lichtmaschinen bekannt ist. Das setzt voraus, daß der Rotor mit einer vergleichbaren Drehzahl umläuft, die bei ausgeführten und am Markt erhältlichen Systemen bezogen auf ein 28-Zoll-Laufrad mindestens das 19-fache der Laufraddrehzahl beträgt.

Nach der Erfindung wird die Betriebssicherheit erhöht, weil die Position des Rotor/Stator-Induktionssystems relativ zur Achse im ein- und ausgeschalteten Zustand konstant und eine Verschiebung nicht mehr erforderlich ist. Für die Ein/Aus-Schaltung der integrierten Schaltkupplung müssen nur wenige Teile bewegt werden. Im ausgeschalteten Zustand werden alle Getriebeteile relativ zur Achse stillgesetzt, was zur Schonung des als Planetengetriebe ausgebildeten Getriebes und zu einem optimalen Nabenleichtlauf führt. Im eingeschalteten Zustand besteht für das Getriebe ein Überlastungsschutz. Getriebeüberlastung kann im beschleunigten oder verzögerten Betrieb bei abrupten Drehzahländerungen auftreten. Um dann das Getriebe vor Überlastung zu schützen, ist die Schließkraft der Kupplung so dimensioniert, daß nur eine definierte, nicht zur Getriebeüberlastung führende maximale Leistung übertragen werden kann. Da weder für die Ein/Aus-schaltung hoch für die Stromabnahme der Raum der Achse einbezogen ist, läßt sich die Achse als Hohlachse ausführen, die geeignet ist, eine bekannte Schnellspannvorrichtung aufzunehmen. Alternativ ist die Nabenfixierung in der Gabel auch durch Schrauben möglich, für die ein Aufnahmegewinde vorgesehen ist. Für die Stromabnahme ist ein spezieller Stecker vorgesehen, bei dem eine häufige Montage und Demontage nicht zu verminderter Betriebssicherheit führt und der die Möglichkeit bietet, alle elektrischen Leiter zu einem kompakten Kabel zusammenzufassen, das gut gegen Beschädigungen zu schützen ist und auch einen Drehzahlimpuls der Nabe für eine Tachoanzeige enthalten kann.

Durch die Verkürzung des Hohlzylinders und die Nutzung eines größeren Durchmessers steht für das Rotor-/Stator-lnduktionssystem mehr Platz zur Verfügung, wodurch bei gleicher Magnetstärke die Induktion einer größeren Menge elektrischer Energie möglich ist.

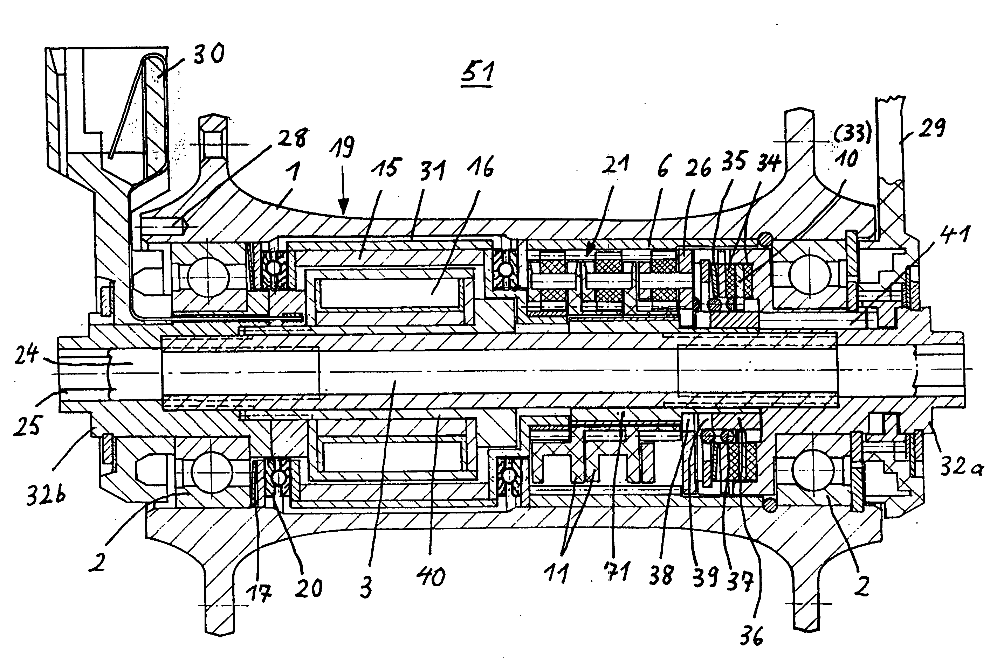

Die Erfindung wird nachstehend am Beispiel der in der Zeichnung in einer schematischen Seitenansicht im Schnitt dargestellten Nabenlichtmaschine näher erläutert, die bei ausgeschaltetem Zustand einen verbesserten Leichtlauf aufweist.

Die Nabenlichtmaschine 51 weist einen Nabenkörper 1 auf, in dem mittels Lagerkörpern 32a, 32b eine Achse 3 durch an den Randseiten des Nabenkörpers 1 angeordnete Lager 2 gelagert ist. Die Lager 2 sind als Rillenkugellager ausgebildet. An dem einen Endabschnitt der Nabenlichtmaschine 51 ist eine Steckerscheibe 30 als Stromabnahmekontakt vorgesehen. An dem anderen Endabschnitt der Nabenlichtmaschine 51 befindet sich ein Stellhebel 29 zur Betätigung einer Kupplung 33 zur Inbetriebnahme der Nabenlichtmaschine 51. Hierzu ist der Stellhebel 29 mit einem als Stift 41 ausgebildeten Stellglied verbunden. Das Rotor-/Stator-lnduktionssystem 19 besteht aus einem Magnetrotor 15, der um eine feste Spulenanordnung 16 rotiert. Im ausgekuppelten Zustand stehen der Hohlzylinder 6 und Magnetrotor 15 relativ zur Achse 3 still. Im eingekuppelten Zustand läuft der Hohlzylinder 6 dann mit der Drehzahl des Nabenkörpers 1. Die relativ langsamen Planetenträger 11 der zweiten und dritten Getriebestufe können mit Gleitlagem auf einer gehärteten und geschliffenen Laufbuchse 71 laufen, die ihrerseits fest auf die Achse 3 aufgepreßt ist.

Im eingeschalteten Zustand, d.h., wenn elektrischer Strom erzeugt werden soll, läuft der Hohlzylinder 6 synchron zum Nabenkörper 1. Wird die Ritzelscheibe 26 auf der Achse 3 festgehalten, so läuft der Magnetrotor 15 mit ca. der 20-fachen Nabendrehzahl in Gegenrichtung. Für diesen Zustand wäre es möglich, den Hohlzylinder 6 fest mit dem Nabenkörper 1 zu verbinden, was zu einer noch steiferen und einfacheren Bauform führen würde.

Im ausgeschalteten Zustand soll die Nabe den Leichtlauf von anderen hochwertigen Vorderrad-Naben erreichen. Das ist nur möglich, wenn das Rotor/Stator-Induktionssystem 19 dann keinen Strom erzeugt und das Getriebe 21 keine Leerlaufleistung aufnimmt. Dieser Zustand kann erreicht werden, wenn die Verbindung der Ritzelscheibe 26 der ersten Stirnradstufe 23 des Getriebes 21 von der Achse 3 gelöst wird. Sitzen das Rotor-/Stator-Induktionssystem 19 mit dem Getriebe 21 auf einer gemeinsamen, drehbar auf der Achse 3 angeordneten Hülse, so würde diese Hülse im ausgeschalteten Zustand synchron zum Nabenkörper 1 umlaufen und die oben beschriebenen Bedingungen wären idealtypisch erreicht. Allerdings wäre in diesem Fall die Stromabnahme aus der Induktionsspule über Schleifringe zu realisieren und außerdem würde sich eine gewisse Lagerreibung der Hülse auf der Achse 3 ergeben.

Ferner ist es von Vorteil, die erforderlichen Schaltkräfte der Ein/Aus-Schaltung zu vermindern, die über den Stift 41 übertragen werden. Das wird erreicht durch Anordnung einer Rutschkupplung 33.

Die Rutschkupplung 33 ist im Lagerkörper 32a integriert. Die Kupplungsscheibe 10 liegt zwischen gegen Verdrehen gesicherten Kupplungsbelägen 34, die mit Hilfe einer Tellerfeder 35 definiert zusammengedrückt werden. Bei Überschreiten eines definierten Drehmomentes rutscht die Kupplungsscheibe 10 durch. An dem Innendurchmesser der Kupplungsscheibe 10 sind Lappen vorgesehen, die formschlüssig in Längsnuten eines Stellrings 36 eingreifen. Der Stellring 36 ist buchsenförmig ausgebildet und auf der Achse 3 angeordnet und wird mittels einer Druckfeder 37 gegen den Stift 41 gedrückt. Die Ritzelscheibe 26 weist an ihrem Innendurchmesser eine Verzahnung 38 auf, die mit einer Verzahnung 39 des Stellrings 36 in Eingriff gebracht werden kann. Hierdurch wird die Ritzelscheibe 28 relativ zur Achse 3 festgehalten, so daß Stromerzeugung aufgenommen werden kann.

Die Spulenanordnung 16 ist über ein nicht magnetisches Klemmstück 40, das buchsenförmig ausgebildet und auf der Achse 3 angeordnet ist, fest auf den Lagerkörper 32b aufgeschraubt. Hierdurch besteht die Möglichkeit einer festen Steckverbindung für die Stromabnahme. Das Lager 2 des Lagerkörpers 32b ist an seinem Außenring als Loslager gestaltet. Das andere Lager 2 des Lagerkörpers 32a ist dagegen als Festlager ausgebildet. Der Magnetrotor 15 ist über zwei durch eine Feder 17 vorgespannte Axiallager 20 geführt, die außerhalb des Induktionsbereiches des Magnetrotors 15 liegen, um elektrische Verluste zu vermeiden. Durch diese Federverspannung wird auch für die Lager 2 eine Spielfreiheit erreicht. Die Ritzelscheibe 26 überträgt keine Leistung mehr, wenn die Kurvenscheibe den Stift 41 freigibt und die Druckfeder 37 den Stellring 36 nach rechts auf der Verzahnung drückt. Da die Spulenanordnung 16 relativ zur Achse 3 steht, wird auch der Magnetrotor 15 im ausgeschalteten Zustand relativ zur Achse 3 zur Ruhe kommen, so daß keine Feldlinien mehr geschnitten werden. Da der Hohlzylinder 6 mit der Drehzahl des Nabenkörpers 1 rotiert, ergibt sich, daß die Ritzelscheibe 26 nicht ganz mit Nabendrehzahl rotiert, sondern bei ca. 20 Nabenumdrehungen um eine Umdrehung zurückbleibt. Die Zahnräder des Getriebes 21 bewegen sich also im Leerlauf und ohne Leistungsaufnahme ganz langsam, was zu einer vernachlässigbar geringen Verlustleistung führt. Wenn der Stift 41 in seiner rechten Endlage ist, ist die Druckfeder 37 vollkommen entspannt, die Verzahnung außer Eingriff und die Ritzelscheibe 26 vollkommen frei.

Die Laufbuchse 71 ist über ein Linksgewinde auf die Achse 3 aufgeschraubt. Damit wird sichergestellt, daß sich die Laufbuchse 71 während des Betriebes nicht lockert. Die Lagerung der Planetenträger 11 auf der Laufbuchse 71 erfolgt aus Sicherheitsgründen.

Die Achse 3 ist in den Lagerkörper 32a mit Linksgewinde und in den Lagerkörper 32b mit Rechtsgewinde eingeschraubt. Die Lagerkörper 32a, 32b haben an ihren Innenbohrungen 24 Ausnehmuhgen 25 für Innensechskantschlüssel, mit denen die Nabe sehr einfach geöffnet werden kann.

Die Magnete 28 an der linken Stirnseife des Nabenkörpers 1 dienen als Impulsgeber für die Drehzahl, d. h. für die Fahrgeschwindigkeit. Das führt zu einem besonders kurzen Leitungsdraht in der Steckerscheibe 30, von wo über einen serienmäßigen Westernstecker Strom und Signale abgenommen werden. Der Westernstecker ist so ausgelegt, daß auch ein häufiges Öffnen und Schließen nicht zu Funktionsbeeinträchtigungen führt.

Der Nabenkörper 1 ist im Bereich des Magnetrotors 15 hinterdreht, um einen maximal großen Magnetrotor 15 verwenden zu können und trotzdem einen ausreichenden Spalt 31 sicherzustellen.

## Patentansprüche

1. Nabenlichtmaschine zur Montage in einer Nabe eines Laufrades eines Fahrrades, die zwei zum Befestigen von Speichen für die Felgenhalterung dienende Nabenflansche aufweist und drehbar auf einer Achse (3) des Laufrades montiert ist, bei der mittels eines Getriebes (21) ein Rotor/Stator-Induktionssystem zur Stromerzeugung angetrieben und der erzeugte Strom über einen Stromabnahmekontakt abgeführt wird, wobei der Rotor ein Zahnritzel trägt, das mit dem Getriebe (21) in Wirkverbindung steht, das durch Federdruck mittels einer Kupplung (33) mit einer Kupplungsscheibe in Wirkverbindung bringbar ist, die synchron zum Nabenkörper (1) rotiert, wobei die Kupplung (33) mittels in axialer Richtung mittels einer Kurvenscheibe verschiebbaren Stiften (41) betätigbar ist, und wobei das Getriebe (21) im ausgeschalteten Zustand vollständig vom Nabenkörper (1) getrennt ist und vollständig relativ zur Achse (3) zur Ruhe kommt und die Ritzelscheibe (26) der ersten Stirnradstufe des Getriebes (21) lösbar oder fest mit der Achse (3) verbunden ist, der das Getriebe (21) umgebende Hohlzylinder (6) mit Innenverzahnung alle Getriebestufen übergreift, und die auf die erste Getriebestufe folgenden Getriebestufen als Planetengetriebe ausgebildet sind, **dadurch gekennzeichnet, daß** die Kupplung (33) als Rutschkupplung ausgebildet ist, deren Kupplungsscheibe (10) beidseitig an gegen Verdrehen gesicherten Kupplungsbelägen (34) mittels einer Druckfeder (37) beidseitig zur Anlage bringbar und mittels am Innenrad ausgebildeter Lappen in Längsnuten eines buchsenförmigen Stellrings (36) geführt ist, der auf der Achse (3) angeordnet und mittels des Stiftes (41) koaxial zur Achse (3) verschiebbar ist, wobei an dem Stellring (36) eine Verzahnung (39) ausgebildet ist, die mit einer Verzahnung (38) der Ritzelscheibe (26) in lösbare Wirkverbindung bringbar ist.

2. Nabenlichtmaschine nach Anspruch 1, **dadurch gekennzeichnet, daß** die Spulenanordnung (16) auf einem auf die Achse (3) geschobenen allgemein buchsenförmigen Klemmstück (40) angeordnet ist, das in den Lagerkörpern (32b) eingeschraubt ist.

3. Nabenlichtmaschine nach Anspruch 1 und 2, **dadurch gekennzeichnet, daß** der Magnetrotor (15) beidseitig an jeweils einem Axiallager (20) anliegt, von dem das eine Axiallager (20) von einer Feder (17) druckbeaufschlagt ist.

4. Nabenlichtmaschine nach Anspruch 3, **dadurch gekennzeichnet, daß** die Feder (17) an dem Außenring des Lagers (2) anliegt, das auf dem Lagerkörper (32b) angeordnet ist.

## Claims

1. Hub dynamo for installation in a hub of a bicycle wheel, wherein said dynamo is rotatably installed on an axle (3) of the bicycle wheel and contains two hub flanges for mounting spokes in order to stabilize the rim, wherein a rotor/stator induction system for generating a current is driven by means of a gear (21) and the generated current is delivered via a current collector contact, wherein the rotor carries a pinion that is functionally connected to the gear (21) that, in turn, can be functionally connected to a clutch disk that rotates synchronously with the hub body (1) by means of a clutch (33) under the influence of a spring pressure, wherein the clutch (33) is actuated by pins (41) that can be axially displaced by means of a cam plate, wherein the gear (21) is completely disengaged from the hub body (1) in the deactivated state and at a complete standstill referred to the axle (3), wherein the pinion (26) of the first spur wheel stage of the gear (21) is separably or rigidly connected to the axle (3), wherein the hollow cylinder (6) that surrounds the gear (21) contains an internal toothing and overlaps all gear stages, and wherein the gear stages that follow the first gear stage are realized in the form of planetary gears, **characterized by** the fact that the clutch (33) is realized in the form of a friction clutch, wherein both sides of the clutch disk (10) can be brought in contact with clutch linings (34) that are secured from rotating under the influence of a compression spring (37), wherein said clutch disk is guided in longitudinal grooves of a bushing-shaped adjusting ring (36) by means of tabs arranged on the internally geared wheel, wherein said adjusting ring is arranged on the axle (3) and can be displaced coaxially to the axle (3) by means of the pin (41), and wherein a toothing (39) that can be functionally engaged with a toothing (38) of the pinion (26) in a separable fashion is arranged on the adjusting ring (36).

2. Hub dynamo according to Claim 1, **characterized by** the fact that the coil arrangement (16) is arranged on a generally bushing-shaped clamping element (40) that is pushed onto the axle (3) and screwed into the bearing members (32b).

3. Hub dynamo according to Claims 1 and 2, **characterized by** the fact that the magnetic rotor (15) respectively adjoins one axial bearing (20) on both sides, wherein the pressure of a spring (17) acts upon one of the axial bearings (20).

4. Hub dynamo according to Claim 3, **characterized by** the fact that the spring (17) adjoins the outer race of the bearing (2) that is arranged on the bearing member (32b).

## Revendications

1. Dynamo d'éclairage pour moyeu de roue pour montage dans un moyeu d'une roue de bicyclette, qui présente deux brides à moyeu servant à la fixation de rayons pour le support de jante et est montée de façon à pouvoir pivoter sur un essieu (3) de la roue, par laquelle, au moyen d'une transmission (21), un système d'induction à rotor/stator est entraîné pour la production de courant et le courant produit est dévié par un contact de prise de courant, le rotor supportant un pignon denté qui est en liaison fonctionnelle avec la transmission (21), qui peut être mise en liaison fonctionnelle par pression de ressort au moyen d'un embrayage (33) avec un disque d'embrayage, qui tourne de manière synchrone par rapport au corps du moyeu (1), l'embrayage (33) pouvant être actionné au moyen d'une broche (41) pouvant être déplacée au moyen d'un disque à came, et la transmission (21) étant séparée complètement du corps du moyeu (1) une fois débranchée et se mettant totalement au repos par rapport à l'essieu (3) et le disque à pignon (26) du premier train d'engrenage frontal de la transmission (21) étant relié de manière mobile ou fixe à l'essieu (3), le cylindre creux (6) entourant la transmission (21) engrenant tous les rapports de démultiplication avec sa denture interne, et les rapports de démultiplication suivant le premier rapport étant conçus sous forme d'engrenages planétaires, **caractérisée en ce que** l'embrayage (33) est conçu comme un embrayage à friction, dont le disque d'embrayage (10) peut être amené sur les deux côtés contre des garnitures d'embrayage (34) sécurisées contre la torsion au moyen d'un ressort à pression (37) et est guidé au moyen d'appendices formés sur l'intérieur de la roue dans les rainures longitudinales d'une bague d'arrêt (36) en forme de douille, qui est disposée sur l'essieu (3) et peut être déplacée au moyen de la broche (41) de manière coaxiale par rapport à l'essieu (3), une denture (39), qui peut être mise en liaison fonctionnelle amovible avec une denture (38) du disque à pignon (26), étant formée sur la bague d'arrêt (36).

2. Dynamo d'éclairage pour moyeu de roue selon la revendication 1, **caractérisée en ce que** l'agencement des bobines (16) est installé sur une pièce de serrage (40) en général en forme de douille glissée sur l'essieu (3), qui est vissée dans les corps de paliers (32b).

3. Dynamo d'éclairage pour moyeu de roue selon la revendication 1 et 2, **caractérisée en ce que** le rotor magnétique (15) repose des deux côtés respectivement sur un palier axial (20), un palier axial (20) sur les deux étant sollicité par pression par un ressort (17).

4. Dynamo d'éclairage pour moyeu de roue selon la revendication 3, **caractérisée en ce que** le ressort (17) repose sur l'anneau extérieur du palier (2) qui est disposé sur le corps de palier (32b).
